# EUROPÄISCHE PATENTANMELDUNG

(11) **EP 2 767 723 A2**
(43) Veröffentlichungstag der Anmeldung: **20.08.2014**
(21) Anmeldenummer: 14000419.3
(22) Anmeldetag: 05.02.2014
(51) Int. Cl.: F16C 33/72, B60B 7/00, F16C 33/78

(54) **Gehäusebauteil**

(30) Priorität: 14.02.2013 DE 102013101468
(71) Anmelder: Dorma GmbH & Co. KG, 58256 Ennepetal (DE)
(72) Erfinder: Hövener, Franz-Josef, D-44536 Lünen (DE)

(57) **Zusammenfassung**

Die Erfindung betrifft ein Gehäusebauteil (10) für die Abdeckung einer rotationssymmetrischen Öffnung eines Gehäuses eines Achslagers, aufweisend einen Grundköper (20) mit einem Abdeckungsabschnitt (22) zur Abdeckung der Öffnung und einem Anlageabschnitt (24) zur wenigstens teilweisen Anlage an dem Gehäuse, wobei zwischen dem Abdeckungsabschnitt und dem Anlageabschnitt zumindest ein rotationssymmetrischer Biegeabschnitt (26) ausgebildet ist.

## Beschreibung

Die vorliegende Erfindung betrifft ein Gehäusebauteil für die Abdeckung einer rotationssymmetrischen Öffnung eines Gehäuses eines Achslagers sowie ein Verfahren für die Herstellung eines solchen Gehäusebauteils.

Es ist grundsätzlich bekannt, dass Achslager ein Gehäuse aufweisen, um z.B. ein Schmiermittel innerhalb dieses Gehäuses zu halten. Dabei handelt es sich insbesondere um Schmierfett oder Schmieröl. Um eine Montage des Achslagers gewährleisten zu können, sind bei solchen Gehäusen Gehäuseöffnungen vorgesehen, durch welche hindurch die Montage erfolgen kann. Um jedoch die beschriebene Abdichtung für das Schmiermittel zu gewährleisten, sind Abdeckungen insbesondere in Form von eigenen Gehäusebauteilen, für diese Öffnungen notwendig. Häufig erfolgt eine Ausbildung einer solchen Öffnung als Montageöffnung in rotationssymmetrischer Weise, so dass die rotierenden Bauteile durch diese rotationssymmetrische Öffnung in das Gehäuse eingeschoben werden können. Dementsprechend muss auch eine rotationssymmetrische Öffnung verschlossen werden mithilfe einer Abdeckung bzw. eines Gehäusebauteils.

Nachteilhaft bei bekannten Gehäusebauteilen für den Verschluss solcher rotationssymmetrischer Öffnungen ist der hohe Aufwand in der Herstellung. So wird bei bekannten Gehäusebauteilen für das Verschließen häufig ein Drehverfahren eingesetzt. Dabei erfolgt eine spanende Bearbeitung durch Rotation eines runden Werkstücks. Die spanende Bearbeitung erzeugt die jeweils notwendigen Abschnitte eines Grundkörpers, nämlich einen Anlageabschnitt, welcher zur wenigstens teilweisen Anlage an das Gehäuse ausgebildet ist sowie einen Abdeckungsabschnitt, welcher die

Öffnung abdeckt. Das Ausgangsmaterial für eine solche Herstellung ist ein rundes Werkstück, welches eine zylinderförmige Form aufweist. Während der drehenden Bearbeitung erfolgt ein Spanabheben, so dass relativ viel Material abgehoben wird. Darüber hinaus ist das Durchführen eines Drehverfahrens, insbesondere mit geringen Toleranzwerten, mit hohem Kosten- und Zeitaufwand verbunden. Nicht zuletzt wird auf diese Weise ein schweres Bauteil als Gehäusebauteil zur Abdeckung der rotationssymmetrischen Öffnung erzeugt.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise die Fertigung des Gehäusebauteils, bevorzugt bei geringerem Gewicht, zur Verfügung zu stellen.

Voranstehende Aufgabe wird gelöst durch ein Gehäusebauteil mit den Merkmalen des Anspruchs 1 und ein Verfahren mit den Merkmalen des Anspruchs 10. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Gehäusebauteil beschrieben sind, selbstverständlich auch im Zusammenhang mit dem erfindungsgemäßen Verfahren und jeweils umgekehrt, so dass bzgl. der Offenbarung zu den einzelnen Erfindungsaspekten stets wechselseitig Bezug genommen wird bzw. werden kann.

Ein erfindungsgemäßes Gehäusebauteil dient der Abdeckung einer rotationssymmetrischen Öffnung eines Gehäuses eines Achslagers. Hierfür weist das Gehäusebauteil einen Grundköper mit einem Abdeckungsabschnitt und einem Anlageabschnitt auf. Der Abdeckungsabschnitt dient der Abdeckung der Öffnung. Der Anlageabschnitt dient der wenigstens teilweisen Anlage an dem Gehäuse. Ein erfindungsgemäßes Gehäusebauteil zeichnet sich dadurch aus, dass zwischen dem Abdeckungsabschnitt und dem Anlageabschnitt zumindest ein rotationssymmetrischer Biegeabschnitt ausgebildet ist. Damit wird eine besonders kostengünstige und einfache Fertigung möglich.

Ein erfindungsgemäßes Gehäusebauteil kann im Gegensatz zu bekannten Gehäusebauteilen billiger in einem Stanzverfahren oder einem Schneidverfahren mit einem anschließenden Biegeschritt hergestellt werden. Das Erzeugen des rotationssymmetrischen Biegeabschnitts kann durch ein einfaches Biegen oder Abkanten oder auch durch komplexere Prozesse, wie ein Tiefziehen oder ein Verpressen durchgeführt werden.

Unter einem Abdeckungsabschnitt ist im Sinne der vorliegenden Erfindung der funktionale Abschnitt des Grundkörpers zu verstehen, welcher bei eingesetztem Gehäusebauteil in der rotationssymmetrischen Öffnung im Gehäuse des Achslagers diese Öffnung im Wesentlichen vollständig abdeckt. Dabei ist darauf hinzuweisen, dass selbstverständlich bewusste Durchbrüche in dem Abdeckungsabschnitt für die Durchführung von Bauteilen wie eine Ausgangswelle vorgesehen sein können.

Unter einem Anlageabschnitt ist im Sinne der vorliegenden Erfindung der Teil des Grundkörpers zu verstehen, welcher gerade nicht zur Abdeckung dient und dementsprechend separat vom Abdeckungsabschnitt ausgebildet ist. Die Anlage am Gehäuse erfolgt für die definierte Positionierung des Gehäusebauteils relativ zum Gehäuse. So kann der Anlageabschnitt auch als Anschlagsfläche bezeichnet werden, welche in Kontakt mit einer Gegenanschlagsfläche am Gehäuse gelangt. Es erfolgt also damit eine definierte Positionierung des Gehäusebauteils an bzw. in der rotationssymmetrischen Öffnung des Gehäuses.

Das Gehäusebauteil kann gänzlich oder zumindest teilweise ebenfalls rotationssymmetrisch ausgebildet sein. Insbesondere bei einer geplanten Abdichtung zwischen dem Gehäusebauteil und der rotationssymmetrischen Öffnung ist es vorteilhaft, wenn das Gehäusebauteil zumindest im Bereich des rotationssymmetrischen Biegeabschnitts ebenfalls zusätzliche rotationssymmetrische Abschnitte aufweist. Dies erlaubt eine direkte Abdichtung zwischen Gehäusebauteil und Öffnungsrand des Gehäuses bzw. die entsprechende Aufnahme eines Dichtungselements.

Ein Biegeabschnitt ist rotationssymmetrisch insbesondere an die Rotationssymmetrie der Öffnung angepasst. Der Biegeabschnitt führt also das Material des Grundkörpers entlang wenigstens einer Krümmung, so dass von dem Anlageabschnitt ausgehend sich das Material des Grundkörpers über den Biegeabschnitt in das Innere der Öffnung bzw. des Gehäuses des Achslagers hinein erstrecken kann. Dies führt dazu, dass je nach Ausbildung des Gehäuses auch eine Kontaktierung des Abdeckungsabschnitts mit einer Innenwandung des Gehäuses stattfinden kann. Gerade dieser Abschnitt kann zum Abdichten zwischen dem Gehäusebauteil und dem Gehäuse des Achslagers Verwendung finden.

Um den rotationssymmetrischen Biegeabschnitt zur Verfügung zu stellen, handelt es sich bei dem Grundkörper vorzugsweise um eine im Wesentlichen plattenförmige geometrische Ausbildung. Damit kann durch einfache Prozessschritte, wie z.B. Biegen, Tiefziehen oder Verpressen, der erfindungsgemäße rotationssymmetrische Biegeabschnitt zur Verfügung gestellt werden. Dabei erfolgt die Biegung insbesondere um im Wesentlichen 90° bzw. in einem Bereich von ca. 85° bis ca. 95°. Damit kann das bereits beschriebene Hineinragen des Abdeckungsabschnitts in das Innere des Gehäuses, also durch die Öffnung hindurch, erzielt werden.

Insbesondere sind bei einem erfindungsgemäßen Gehäusebauteil mehrere rotationssymmetrische Biegeabschnitte vorgesehen, so dass auch im Verlauf des Abdeckungsabschnitts noch weitere zusätzliche rotationssymmetrische Biegeabschnitte vorgesehen sind. Im Querschnitt kann dadurch eine Profilierung entstehen, welche z.B. eine im Wesentlichen U-förmige Ausprägung aufweist. Damit wird sozusagen der Grundkörper ausgehend vom Anlageabschnitt um den ersten rotationssymmetrischen Biegeabschnitt in Richtung des Innenraums des Gehäuses hineingeführt, und über ein, zwei oder mehrere weitere rotationssymmetrische Biegeabschnitte wieder aus dem Innenraum des Gehäuses herausgeführt. Damit entsteht ein im Wesentlichen U-förmiges Profil, so dass eine mechanische Stabilisierung des gesamten Gehäusebauteils auch eine Abdichtung gegen den Innenrand der Öffnung gewährleisten kann. Darüber hinaus wird die axiale Erstreckung des Gehäusebauteils reduziert, so dass im Inneren des Gehäuses mehr Bauraum für die Achsbauteile bzw. für die Lagerbauteile zur Verfügung steht.

Es kann von Vorteil sein, wenn bei einem erfindungsgemäßen Gehäusebauteil der Grundkörper eine im Wesentlichen plattenförmige Struktur aufweist. Unter einer plattenförmigen Struktur ist eine im Wesentlichen ebene Platte zu verstehen, welche sozusagen aus einer zweidimensionalen Form in die dreidimensionale Form des erfindungsgemäßen Gehäusebauteils gebracht werden kann. Insbesondere der erste Schritt in der Herstellung, also ein Zuschneiden oder Stanzen einer zweidimensionalen Form, kann bei einem plattenförmigen Grundkörper besonders einfach und kostengünstig durchgeführt werden. Unter plattenförmiger Ausbildung ist dabei insbesondere eine geometrische Ausbildung zu verstehen, welche im Vergleich zur Länge und Breite des Grundkörpers eine geringe Dicke aufweist. Solche Materialien werden auch als Blech bzw. Metallblech verwendet.

Vorteilhaft ist es weiter, wenn bei einem erfindungsgemäßen Gehäusebauteil eine Bauteilöffnung in dem Abdeckungsabschnitt für den Durchgang einer Ausgangswelle ausgebildet ist. Für den Fall, dass durch die Öffnung Bauteile aus dem Innenraum des Gehäuses austreten sollen, kann das entsprechende erfindungsgemäße Gehäusebauteil eine solche Bauteilöffnung aufweisen. Dabei kann es sich um statische oder, wie im Fall einer Ausgangswelle, rotierende Bauteile handeln. Diesbezüglich ist auszuführen, dass der Abdeckungsabschnitt in der final montierten Situation des Achslagers die Funktion der Abdeckung zur Verfügung stellen muss. Eine Öffnung für eine Ausgangswelle ist dementsprechend im Rahmen der vorliegenden Erfindung ebenfalls möglich. Vorzugsweise ist die Bauteilöffnung ebenfalls rotationssymmetrisch ausgebildet, insbesondere dann, wenn es sich um eine rotierende Ausgangswelle handelt. Die Ausbildung der Bauteilöffnung erfolgt vorzugsweise parallel versetzt oder sogar koaxial mit der Rotationsachse des Gehäuses und/oder der Ausgangswelle bzw. des gesamten Achslagers.

Ein weiterer Vorteil ist erzielbar, wenn bei einem erfindungsgemäßen Gehäusebauteil über einen weiteren Biegeabschnitt ein gekanteter Rand zur Ausbildung des Öffnungsrandes der Bauteilöffnung ausgebildet ist. Bei der Ausführungsform, wie sie im voranstehenden Absatz erläutert worden ist, erfolgt also eine Korrelation zwischen einer Ausgangswelle und der Bauteilöffnung. Da, wie bereits erläutert worden ist, im Inneren des Gehäuses vorzugsweise ein Schmiermittel vorgesehen ist, muss an dieser Kontaktstelle zwischen dem Gehäusebauteil und der Ausgangswelle ebenfalls eine Abdichtung vorgesehen sein. Das Vorsehen eines weiteren Biegeabschnitts ermöglicht es, einen gekanteten Rand zur Verfügung zu stellen, welcher eine definierte Positionierung des Gehäusebauteils relativ zur Ausgangswelle ermöglicht. Insbesondere können auf diese Weise besonders feine Toleranzgenauigkeiten bei der Positionierung des Gehäusebauteils relativ zur Ausgangswelle erreicht werden. Auf diese Weise wird es möglich, dass entweder besonders gut wirkende Dichtungselemente eingesetzt werden oder sogar auf Dichtungselemente verzichtet werden kann. Dies ist insbesondere dann entscheidend, wenn zwischen der Ausgangswelle und dem gekanteten Rand bei dem Öffnungsrand der Bauteilöffnung eine Relativbewegung stattfinden soll.

Ebenfalls von Vorteil ist, wenn bei einem erfindungsgemäßen Gehäusebauteil wenigstens zwei radiale Durchbrechungen am Umfang des Abdeckungsabschnitts für die Aufnahme eines Dichtungselements ausgebildet sind. Um die Dichtwirkung beim Einsetzen eines erfindungsgemäßen Gehäusebauteils in eine Öffnung eines Gehäuses noch weiter zu verbessern, können zusätzliche Dichtungselemente eingesetzt werden. Um die Positionierung und insbesondere die Erzeugung einer Dichtkraft für solche Dichtungselemente noch weiter zu verbessern, können solche radialen Durchbrechungen verwendet werden. Sie definieren die axiale Position des jeweiligen Dichtungselements, da das Dichtungselement in diese radiale Durchbrechung einrasten kann. Darüber hinaus wird die Herstellung einer solchen radialen Durchbrechung besonders einfach möglich, wenn bereits im zweidimensionalen, also plattenförmigen Zustand des Grundkörpers ein Zuschnitt dieser Durchbrechungen z.B. durch Ausstanzen erfolgt. Darüber hinaus wird durch die Durchbrechungen das Gewicht des Gehäusebauteils weiter reduziert, wodurch ebenfalls Vorteile erzielbar sind. Insbesondere kann die Anzahl der radialen Durchbrechungen gemeinsam mit dem Zuschnitt aus dem plattenförmigen Grundkörper mithilfe eines einzigen Stanzstempels bzw. insbesondere innerhalb eines einzigen Stanzschritts erzeugt werden. Die Komplexität des Gehäusebauteils wird damit trotz der zusätzlichen Funktion der Dichtungselemente nicht verändert.

Vorteilhaft ist es ebenfalls, wenn bei einem erfindungsgemäßen Gehäusebauteil am Abdeckungsabschnitt wenigstens eine umlaufende Bördelung in U-Form für die Aufnahme eines Dichtungselements ausgebildet ist. Diese umlaufende Bördelung kann in einem gemeinsamen Tiefziehschritt oder in einem zusätzlichen radialen Tiefzieh- oder Pressschritt zur Verfügung gestellt werden. Sie dient dazu, ebenfalls eine definierte Positionierung des Dichtungselements sowie eine definierte Beaufschlagung des Dichtungselements mit einer Dichtkraft zu erlauben. In Summe wird hier die Kombination der erfindungsgemäßen Vorteile der reduzierten Aufwendungen für die Herstellung des Gehäusebauteils mit einer im Wesentlichen idealen Abdichtung des Gehäuses ermöglicht.

Vorteilhaft ist es darüber hinaus, wenn bei einem erfindungsgemäßen Gehäusebauteil der Anlageabschnitt als gekanteter Rand durch die Biegung des Biegeabschnitts ausgebildet ist. Mit anderen Worten erfolgt eine besonders kurze Erstreckung vom rotationssymmetrischen Biegeabschnitt bis zum Ende des Grundkörpers am Ende des Anlageabschnitts. Damit wird ebenfalls Material eingespart. Ein gekanteter Rand ist insbesondere im Bereich von ca. 90° über den rotationssymmetrischen Biegeabschnitt abgekantet. Darüber hinaus wird auf diese Weise vorzugsweise eine im Wesentlichen ebene Anlagefläche am Anlageabschnitt zur Verfügung gestellt, so dass eine definierte Kontaktfläche zwischen Gehäuse und dem Anlageabschnitt zur Verfügung gestellt werden kann.

Bei einem erfindungsgemäßen Gehäusebauteil kann es weiter von Vorteil sein, wenn der Abdeckungsabschnitt einen Einführkonus für ein erleichtertes Einsetzen in die Öffnung aufweist. Insbesondere ist dies dann von Vorteil, wenn das gesamte Gehäusebauteil im Wesentlichen rotationssymmetrisch ausgebildet ist. Der Einführkonus dient dazu, eine Positionierung bzw. Zentrierung des Gehäusebauteils beim Einsetzen in die Öffnung durchzuführen. Damit wird die Montage des gesamten Achslagers verbessert bzw. mit höherer Sicherheit mit der gewünschten Dichtigkeit versehen. Der Einführkonus ist dabei vorzugsweise mit Einführschrägen im Bereich zwischen ca. 30° und ca. 60° versehen.

Ein weiterer Vorteil ist es, wenn bei einem erfindungsgemäßen Gehäusebauteil die Herstellung des zumindest einen Biegeabschnitts durch wenigstens einen der folgenden Produktionsschritte erfolgt:
- Tiefziehen
- Biegen
- Bördeln

Bei der voranstehenden Aufzählung handelt es sich um eine nicht abschließende Liste. Je nachdem welcher Fertigungsschritt verwendet wird, und in Abhängigkeit des verwendeten Materials (insbesondere bei Metallen), entstehen Gefügeveränderungen im Material des Grundkörpers. Bei der Verwendung von Metallblech als Ausgangsmaterial kann durch die Kaltumformung der Produktionsschritte eine Kaltverfestigung eintreten, welche die mechanische Stabilität des Gehäusebauteils weiter vorteilhaft beeinflusst. Je nachdem welche Komplexität in der Profilierung des Grundkörpers gewünscht ist, können die einzelnen Produktionsschritte auch miteinander kombiniert werden.

Ebenfalls Gegenstand der vorliegenden Erfindung ist ein Verfahren für die Herstellung eines Gehäusebauteils, insbesondere gemäß der vorliegenden Erfindung, für die Abdeckung einer rotationssymmetrischen Öffnung eines Gehäuses eines Achslagers, aufweisend die folgenden Schritte:
- Zur Verfügung stellen eines plattenförmigen Grundkörpers,
- Ausstanzen einer zweidimensionalen Form aus dem plattenförmigen Grundkörper,
- Erzeugen wenigstens eines rotationssymmetrischen Biegeabschnitts an dem Grundkörper zwischen einem Abdeckungsabschnitt des Grundkörpers zur Abdeckung der Öffnung und einem Anlageabschnitt des Grundkörpers zur wenigstens teilweisen Anlage an dem Gehäuse.

Ein erfindungsgemäßes Verfahren bringt vorzugsweise die gleichen Vorteile mit sich, wie sie ausführlich mit Bezug auf ein erfindungsgemäßes Gehäusebauteil erläutert worden sind. Insbesondere ist darauf hinzuweisen, dass zwei grundsätzliche Verfahrensschritte hintereinander erfolgen. In einem ersten Schritt erfolgt der Zuschnitt oder das Ausstanzen in zweidimensionaler Richtung. Durch das anschließende Erzeugen des wenigstens einen rotationssymmetrischen Biegeabschnitts erfolgt eine dreidimensionale Profilierung in mehr oder weniger komplexer Weise.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine erste Ausführungsform eines erfindungsgemäßen Gehäusebauteils,
- Fig. 2: eine weitere Ausführungsform eines erfindungsgemäßen Gehäusebauteils,
- Fig. 3: eine weitere Ausführungsform eines erfindungsgemäßen Gehäusebauteils,
- Fig. 4: einen erster Schritt eines erfindungsgemäßen Verfahrens,
- Fig. 5: einen zweiter Schritt eines erfindungsgemäßen Verfahrens,
- Fig. 6: das Ergebnis eines erfindungsgemäßen Verfahrens und
- Fig. 7: die Einsatzsituation eines erfindungsgemäßen Gehäusebauteils.

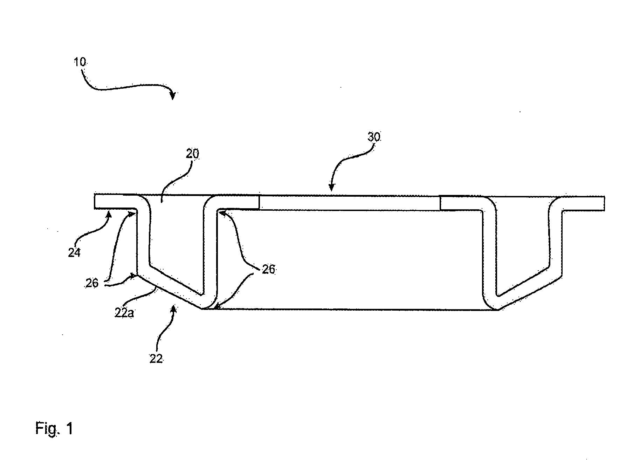

In Figur 1 ist eine erste Ausführungsform eines erfindungsgemäßen Gehäusebauteils 10 dargestellt. Hier ist ein schematischer Querschnitt zu erkennen. Wie aus Figur 1 hervorgeht, handelt es sich bei dem Gehäusebauteil 10 um eine im Wesentlichen rotationssymmetrische Ausbildung, welche hier im Querschnitt dargestellt ist.

Bei der Ausführungsform gemäß Figur 1 ist zwischen dem Anlageabschnitt 24 und dem Abdeckungsabschnitt 22 ein rotationssymmetrischer Biegeabschnitt 26 links oben vorgesehen. Darüber hinaus sind im Verlauf des Abdeckungsschnitts 22 noch drei weitere rotationssymmetrische Biegeabschnitte 26 vorgesehen. Auf diese Weise wird die etwas komplexere Profilkontur des Gehäusebauteils 10 erzielt. Der Grundkörper 20 wird also von außen ausgehend vom Anlageabschnitt 24 um insgesamt vier rotationssymmetrische Biegeabschnitte 26 herumgeführt, so dass er an seinem Innenöffnungsrand eine definierte Durchbrechung als Bauteilöffnung 30 aufweist.

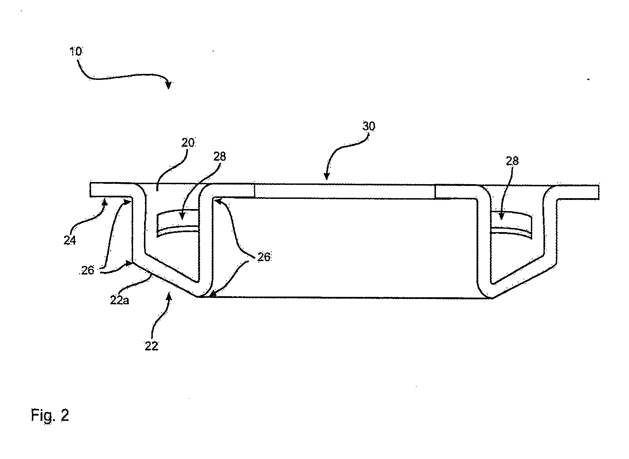

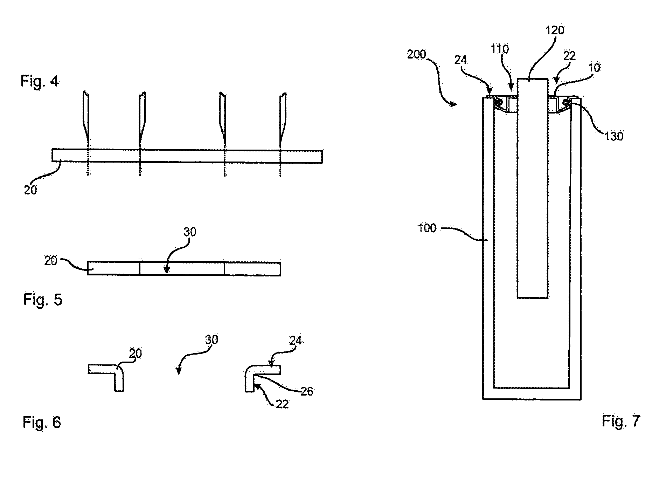

In Figur 2 ist eine Weiterentwicklung der Ausführungsform gemäß Figur 1 dargestellt. So ist hier grundsätzlich die gleiche Profilierung vorgesehen. Jedoch sind im Grundkörper im Bereich des Abdeckungsabschnitts 22 zusätzliche radiale Durchbrechungen 28 vorgesehen. In diese radialen Durchbrechungen können Dichtungselemente 130 eingesetzt werden. Dies ist insbesondere in Korrelation mit Figur 7 zu sehen, welche das eingesetzte Dichtungselement 130 mit positioniertem Gehäusebauteil 10 zeigt.

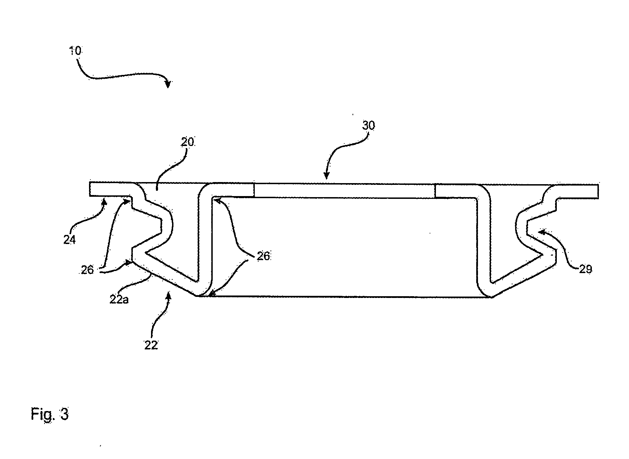

In Figur 3 ist eine weitere Ausführungsform dargestellt, welche ein Gehäusebauteil 10 mit einem Dichtungselement 130 kombinieren lässt. Hier ist eine umlaufende Bördelung 29 vorgesehen, welche die entsprechende Positionierhilfe für das Dichtungselement 130 zur Verfügung stellt.

Allen Ausführungsformen der Figur 1 bis 3 ist gemeinsam, dass sie durch im Wesentlichen zwei aufeinanderfolgende Schritte hergestellt werden. In einem ersten Schritt wird aus einem flachen Grundkörper 20 eine entsprechende zweidimensionale Struktur ausgeschnitten bzw. ausgestanzt. Dies ist schematisch in Figur 4 dargestellt. Im Ergebnis können die Bauteilöffnungen 30 und bereits die äußeren Kanten des Grundkörpers 20 definiert zur Verfügung gestellt sein. Diese Situation zeigt die Figur 5. Anschließend erfolgt wenigstens ein Biegeschritt, welcher durch ein Biegeverfahren, ein Tiefziehverfahren oder ein Pressverfahren erzeugt werden kann. Im Ergebnis wird eine Separierung des Grundkörpers 20 in den Anlageabschnitt 24 und den Abdeckungsabschnitt 22 dahingehend erfolgen, dass mindestens ein rotationssymmetrischer Biegeabschnitt 26 zur Verfügung gestellt wird.

In Figur 7 ist eine Montagesituation dargestellt, bei welcher an einem Achslager 200 innerhalb eines Gehäuses 100 nicht dargestellte Lagerbauteile aufgenommen sind. Aus dem Gehäuse 100 ragt eine Ausgangswelle 120 durch eine rotationssymmetrische Öffnung 110 heraus. Der Zwischenraum, welcher zwischen Gehäuse 100 und Ausgangswelle 120 bestehen bleibt, wird durch ein erfindungsgemäßes Gehäusebauteil 10 abgedichtet. Hier handelt es sich um ein Gehäusebauteil 10 mit einer Ausführungsform gemäß Figur 3, so dass zusätzlich ein Dichtungselement 130 eingesetzt wurde. Dies dient der weiteren Abdichtung des Innenraums des Gehäuses 100.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Gehäusebauteil
- 20: Grundköper
- 22: Abdeckungsabschnitt
- 22a: Einführkonus
- 24: Anlageabschnitt
- 26: rotationssymmetrischer Biegeabschnitt
- 28: radiale Durchbrechung
- 29: umlaufende Bördelung
- 30: Bauteilöffnung

- 100: Gehäuse
- 110: Öffnung
- 120: Ausgangswelle
- 130: Dichtungselement
- 200: Achslager

## Patentansprüche

1. Gehäusebauteil (10) für die Abdeckung einer rotationssymmetrischen Öffnung (110) eines Gehäuses (100) eines Achslagers (200), aufweisend einen Grundköper (20) mit einem Abdeckungsabschnitt (22) zur Abdeckung der Öffnung (110) und einem Anlageabschnitt (24) zur wenigstens teilweisen Anlage an dem Gehäuse (100), **dadurch gekennzeichnet, dass** zwischen dem Abdeckungsabschnitt (22) und dem Anlageabschnitt (24) zumindest ein rotationssymmetrischer Biegeabschnitt (26) ausgebildet ist.

2. Gehäusebauteil (10) nach Anspruch 1, **dadurch gekennzeichnet, dass** der Grundkörper (20) eine im Wesentlichen plattenförmige Struktur aufweist.

3. Gehäusebauteil (10) nach einem der vorangegangenen Ansprüche, **dadurch gekennzeichnet, dass** eine Bauteilöffnung (30) in dem Abdeckungsabschnitt (22) für den Durchgang einer Ausgangswelle (120) ausgebildet ist.

4. Gehäusebauteil (10) nach Anspruch 3, **dadurch gekennzeichnet, dass** über einen weiteren Biegeabschnitt (26) ein gekanteter Rand zur Ausbildung des Öffnungsrandes der Bauteilöffnung (30) ausgebildet ist.

5. Gehäusebauteil (10) nach einem der vorangegangenen Ansprüche, **dadurch gekennzeichnet, dass** wenigstens zwei radiale Durchbrechungen (28) am Umfang des Abdeckungsabschnitts (22) für die Aufnahme eines Dichtungselements (130) ausgebildet sind.

6. Gehäusebauteil (10) nach einem der vorangegangenen Ansprüche, **dadurch gekennzeichnet, dass** am Abdeckungsabschnitt (22) wenigstens eine umlaufende Bördelung (29) in U-Form für die Aufnahme eines Dichtungselements (130) ausgebildet ist.

7. Gehäusebauteil (10) nach einem der vorangegangenen Ansprüche, **dadurch gekennzeichnet, dass** der Anlageabschnitt (24) als gekanteter Rand durch die Biegung des Biegeabschnitts (26) ausgebildet ist.

8. Gehäusebauteil (10) nach einem der vorangegangenen Ansprüche, **dadurch gekennzeichnet, dass** der Abdeckungsabschnitt (22) einen Einführkonus (22a) für ein erleichtertes Einsetzen in die Öffnung (110) aufweist.

9. Gehäusebauteil (10) nach einem der vorangegangenen Ansprüche, **dadurch gekennzeichnet, dass** die Herstellung des zumindest einen Biegeabschnitts (26) durch wenigstens einen der folgenden Produktionsschritte erfolgt:
- Tiefziehen
- Biegen
- Bördeln

10. Verfahren für die Herstellung eines Gehäusebauteils (10), insbesondere mit den Merkmalen eines der Ansprüche 1 bis 9, für die Abdeckung einer rotationssymmetrischen Öffnung (110) eines Gehäuses (100) eines Achslagers (200), aufweisend die folgenden Schritte:
- Zur Verfügung stellen eines plattenförmigen Grundkörpers (20),
- Ausstanzen einer zweidimensionalen Form aus dem plattenförmigen Grundkörper (20),
- Erzeugen wenigstens eines rotationssymmetrischen Biegeabschnitts (26) an dem Grundkörper (20) zwischen einem Abdeckungsabschnitt (22) des Grundkörpers (20) zur Abdeckung der Öffnung (110) und einem Anlageabschnitt (24) des Grundkörpers (20) zur wenigstens teilweisen Anlage an dem Gehäuse (100).
